# DEMANDE DE BREVET EUROPEEN

(11) **EP 4 746 382 A1**
(43) Date de publication de la demande: **20.05.2026**
(21) Numéro de dépôt: 25214011.6
(22) Date de dépôt: 06.11.2025
(51) Int. Cl.: H04L 67/12, G05B 23/02, H04Q 9/00

(54) **CAPTEUR DE DONNÉES DE SURVEILLANCE POUR UN DISPOSITIF, ENSEMBLE COMPRENANT UN TEL CAPTEUR ET PROCÉDÉ DE MESURE DE DONNÉES DE SURVEILLANCE**

(30) Priorité: 07.11.2024 FR 2412199
(71) Demandeur: SCHNEIDER ELECTRIC INDUSTRIES SAS, 92500 Rueil-Malmaison (FR)
(72) Inventeur: GEFFROY, Vincent, 38000 GRENOBLE (FR); GERARD, Laurent, 38700 CORENC (FR)
(74) Mandataire: Lavoix

(57) **Abrégé**

La présente invention concerne un capteur (3) de données de surveillance pour un dispositif. Le capteur (3) est configuré pour acquérir des données de fonctionnement primaires (D1, D2) sur le dispositif. Le capteur (3) comprend un serveur (7) configuré pour recevoir des requêtes de la part d'un client (5). Le serveur (7) comprend un module de transmission des données de fonctionnement primaires (11), configuré pour mettre en forme un fichier de données primaires à partir des données de fonctionnement primaires et transmettre le fichier de données primaires à un client (5), uniquement après réception d'une requête d'obtention de données primaires (27A) de la part du client (5).

## Description

La présente invention concerne un capteur de données de surveillance pour un dispositif. Elle concerne également un ensemble comprenant un tel capteur. Elle concerne enfin un procédé de mesure de données de surveillance pour un dispositif au moyen d'un tel capteur.

De nombreuses technologies de capteurs permettent de mesurer des données de surveillance sur un dispositif, par exemple des données d'intensité, de tension ou de puissance sur un moteur électrique. Ces données de surveillance peuvent être utilisées par exemple à des fins de supervision, d'optimisation ou de diagnostic d'un tel dispositif.

Parmi ces nombreuses technologies de capteurs existantes, on peut citer la solution Powertag de Schneider Electric, qui donne globalement satisfaction et qui est une solution fermée et propriétaire, c'est-à-dire dont les capteurs ne sont utilisables qu'avec une suite de logiciel associée Schneider Electric. On peut également citer la solution Socomec Digiware, proposant un calcul et une transmission de données utiles à partir de données primaires mesurées sur un dispositif.

Toutefois, pour ne pas saturer la bande passante lors de la transmission et pour économiser les ressources de transmission et de stockage, de tels capteurs transmettent des données limitées, ce qui ne permet pas de faire des diagnostics avancés sur les charges surveillées. En outre, les données reçues sont limitées aux choix du constructeur.

Le but de l'invention est alors de proposer un capteur de données de surveillance pour un dispositif permettant à un client de disposer des données dont il a besoin, tout en limitant la consommation énergétique et la surcharge des canaux de transmission.

A cet effet, l'invention a pour objet un capteur de données de surveillance pour un dispositif, configuré pour acquérir des données de fonctionnement primaires sur le dispositif, le capteur comprenant un module de transmission des données de fonctionnement primaires, configuré pour mettre en forme un fichier de données primaires à partir des données de fonctionnement primaires et transmettre le fichier de données primaires à un client, tel que :
- le capteur comprend un serveur configuré pour recevoir des requêtes de la part du client ;
- le module de transmission des données de fonctionnement primaires appartient au serveur ; et
- le module de transmission des données de fonctionnement primaires est configuré pour mettre en forme et transmettre le fichier de données primaires uniquement après réception d'une requête d'obtention de données primaires de la part du client.

Grâce à l'invention, les données de fonctionnement primaires sont envoyées à la demande du client, ce qui permet de réduire le flux de données, et donc la consommation énergétique et la charge des canaux de transmission, autrement dit l'occupation de la bande passante, au strict nécessaire. En outre, en libérant des ressources de transmission et de stockage, il est possible de transmettre une plus grande diversité de données selon le besoin du client. Par exemple, il devient possible de transmettre à la demande du client des données de fonctionnement primaires non transformées, pouvant être utiles notamment à des fins de maintenance prédictive et de diagnostic avancé, sans saturer les canaux de transmission. Enfin, la limitation de l'occupation de la bande passante par un capteur permet à un client donné de fonctionner simultanément avec plusieurs capteurs.

Suivant d'autres aspects avantageux de l'invention, le capteur comprend une ou plusieurs des caractéristiques suivantes, prises isolément ou suivant toutes les combinaisons techniquement possibles :
- le capteur comprend :
   - au moins un module de transformation, configuré pour déterminer au moins une donnée de fonctionnement secondaire à partir des données de fonctionnement primaires ; et
   - au moins un module de transmission de données de fonctionnement secondaires, appartenant au serveur, configuré pour enregistrer un mot représentant la dernière valeur déterminée de l'au moins une donnée de fonctionnement secondaire et transmettre le mot au client ;
- le ou au moins l'un des module(s) de transmission de données de fonctionnement secondaires est configuré pour transmettent le mot seulement après réception d'une requête d'obtention de données secondaires de la part du client ;
- le dispositif est un moteur comprenant au moins deux phases et dans lequel les données de fonctionnement primaires comprennent une valeur d'intensité pour chaque phase et une valeur de tension entre les phases ;
- les données de fonctionnement secondaires comprennent au moins une donnée parmi le groupe composé de :
   - une moyenne quadratique d'une donnée de fonctionnement primaire ;
   - un facteur de puissance pour chaque phase ;
   - une puissance active pour chaque phase ;
   - une énergie active pour chaque phase ;
   - une puissance réactive pour chaque phase ;
   - une énergie réactive pour chaque phase ;
   - une puissance apparente pour chaque phase ;
   - une fréquence pour chaque phase ;
   - une estimation d'une vitesse de rotation du moteur ;
   - une estimation d'un couple du moteur ; et
   - un statut interne du capteur ;
- le serveur comprend un module de gestion de paramètres, configuré pour recevoir des paramètres via une requête de changement de paramètres en provenance du client et pour stocker les paramètres, les paramètres déterminant des modalités d'acquisition et/ou de transmission des données de fonctionnement au client.

L'invention concerne également un ensemble composé de :
- au moins un capteur selon ce qui précède ; et
- un client, comprenant un module orchestrateur configuré pour envoyer la requête d'obtention de données primaires au serveur et pour recevoir le fichier de données primaires en provenance du serveur.

Suivant d'autres aspects avantageux de l'invention, l'ensemble comprend une ou plusieurs des caractéristiques suivantes, prises isolément ou suivant toutes les combinaisons techniquement possibles :
- l'ensemble est tel que :
   - le serveur de l'au moins un capteur et le client sont respectivement un serveur et un client selon le protocole OPC-UA ;
   - la transmission des fichiers de données et des requêtes entre le serveur et le client se fait via un protocole Ethernet ;
   - le client comprend un module réseau serveur, configuré pour affecter une adresse IP à l'au moins un capteur ; et
   - le serveur comprend un module réseau client, configuré pour recevoir l'adresse IP affectée par le client ;
- le client comprend un module d'analyse, configuré pour recevoir et analyser le fichier de données primaires reçu par le module orchestrateur à des fins de maintenance prédictive du dispositif ou de diagnostic avancé du dispositif.

L'invention concerne également un procédé de mesure de données de fonctionnement pour un dispositif au moyen d'un capteur selon ce qui précède, le procédé comprenant :
- une acquisition des données de fonctionnement primaires par le capteur ;
- une réception par le serveur de la requête d'obtention de données primaires ; puis
- une mise en forme du fichier de données primaires et une transmission du fichier de données primaires au client par le module de transmission de données de fonctionnement primaire.

Ce procédé induit les mêmes avantages que ceux mentionnés ci-dessus au sujet du capteur de données de surveillance de l'invention.

L'invention apparaîtra plus clairement à la lecture de la description qui va suivre, donnée uniquement à titre d'exemple non limitatif, et faite en référence aux dessins dans lesquels :
[Fig. 1] la figure 1 est un schéma d'un ensemble comprenant un client et un capteur de données de surveillance pour un dispositif, selon l'invention ;
[Fig. 2] la figure 2 est un schéma représentant temporellement trois exemples d'échanges de requêtes entre le capteur et le client de la figure 1, correspondant aux trois inserts (A) à (C).

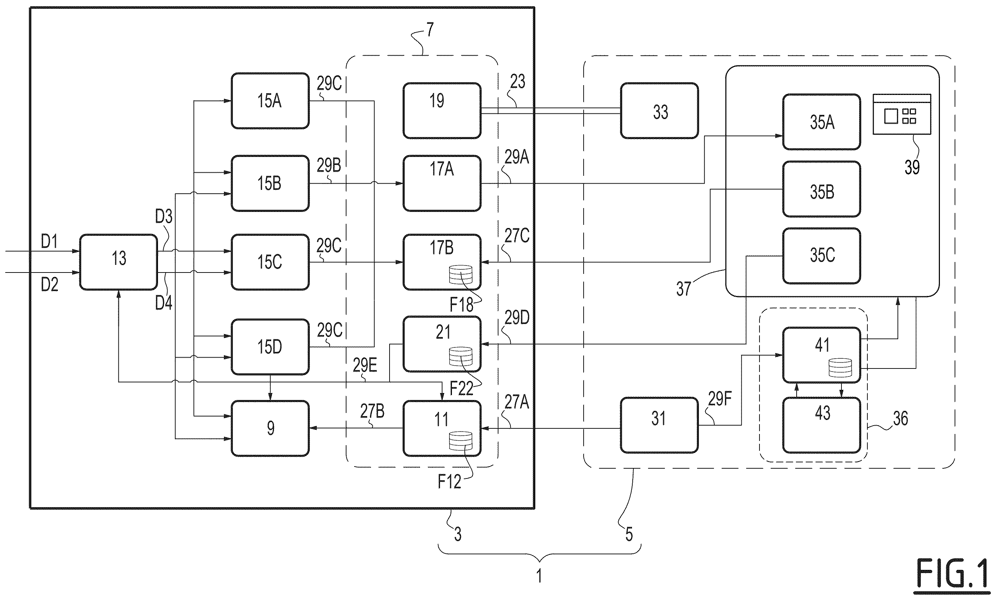

La figure 1 représente un ensemble 1 formé d'un capteur de données de surveillance 3 pour un dispositif et d'un client 5. En variante non représentée, l'ensemble 1 comprend plusieurs capteurs 3 communiquant avec le même client 5.

Le dispositif, non représenté, est par exemple un moteur électrique. Lors de son utilisation, le dispositif est caractérisé par des données de surveillance primaires, également appelées données de fonctionnement primaires, relatives à la manière dont le dispositif fonctionne. Dans le cas d'un moteur électrique comprenant au moins deux phases, les données de surveillance primaires sont, par exemple, une valeur d'intensité pour chaque phase et une valeur de tension entre les phases.

En variante, le dispositif est une vanne, un circuit électrique, une pale, une batterie ou tout autre dispositif dont il peut être utile de connaître des données de surveillance. Les données de surveillance primaires peuvent alors prendre des formes diverses, telles que des valeurs de vitesse, température, position, pression ou débit.

Le capteur 3 est configuré pour acquérir les données de fonctionnement primaires du dispositif, éventuellement calculer des données de fonctionnement secondaires, et transmettre les données de fonctionnement primaires et/ou secondaires au client 5, à la demande du client 5.

Pour ce faire, le capteur 3 comprend un serveur 7, configuré pour recevoir des requêtes de la part du client 5, et plusieurs modules internes ou externes au serveur 7.

Le serveur 7 est avantageusement un serveur selon le protocole OPC-UA (de l'Anglais *Open Platform Communications Unified Architecture*), apte à recevoir et émettre des requêtes depuis et vers le client 5 selon un protocole de transport Ethernet. L'utilisation d'un tel protocole permet d'améliorer la compatibilité du capteur 3 avec différents clients 5.

En variante, le serveur 7 fonctionne selon un autre protocole, notamment tout protocole Ethernet avec requêtes TCP/IP (de l'anglais *Transmission Control Protocol* et *Internet Prococol*).

Le capteur 3 comprend un module de transmission des données de fonctionnement primaires 11. En complément facultatif, il comprend en outre un module d'acquisition de données de fonctionnement primaires 9, un module de traitement du signal 13, au moins un module de transformation 15A, 15B, 15C et/ou 15D, au moins un module de transmission de données de fonctionnement secondaires 17A et/ou 17B, un module réseau client 19 et un module de gestion de paramètres 21.

Les modules de transmission des données de fonctionnement primaires 11, de transmission de données de fonctionnement secondaire 17A-B, réseau client 19 et de gestion de paramètres 21 appartiennent au serveur 7. Les modules d'acquisition de données de fonctionnement primaires 9, de traitement du signal 13 et de transformation 15A-D sont externes au serveur 7.

Le capteur 3 comprend par exemple une unité de traitement d'informations, non représentée, formée par exemple d'une mémoire et d'un processeur associé à la mémoire.

Selon cet exemple, le module de transmission des données de fonctionnement primaires 11, ainsi qu'en complément facultatif le module d'acquisition de données de fonctionnement primaires 9, le module de traitement du signal 13, l'au moins un module de transformation 15A-15D, l'au moins un module de transmission de données de fonctionnement secondaires 17A-B, le module réseau client 19 et le module de gestion de paramètres 21 sont réalisés chacun sous forme d'un logiciel, ou d'une brique logicielle, exécutable par le processeur. La mémoire du capteur 3 est alors apte à stocker un logiciel d'acquisition de données de fonctionnement primaires, ainsi qu'en complément facultatif un logiciel de traitement du signal, un logiciel de transformation, un logiciel de transmission de données de fonctionnement secondaires, un logiciel réseau client et un logiciel de gestion de paramètres. Le processeur est alors apte à exécuter chacun de ces logiciels.

En variante, le module de transmission des données de fonctionnement primaires 11, ainsi qu'en complément facultatif le module d'acquisition de données de fonctionnement primaires 9, le module de traitement du signal 13, l'au moins un module de transformation 15A-15D, l'au moins un module de transmission de données de fonctionnement secondaires 17A-B, le module réseau client 19 et le module de gestion de paramètres 21, sont réalisés chacun sous forme d'un composant logique programmable, tel qu'un FPGA (de l'anglais *Field Programmable Gate Array*)*,* ou encore d'un circuit intégré, tel qu'un ASIC (de l'anglais *Application Specific Integrated Circuit*)*.*

Lorsque le capteur 3 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, tout type de mémoire non-volatile (par exemple FLASH ou NVRAM) ou une carte magnétique. Sur le support lisible est alors mémorisé un programme d'ordinateur comprenant des instructions logicielles.

Le capteur 3 mesure de façon connue au moins l'une des données de fonctionnement primaires, au moyen d'un élément capteur non représenté pour chaque donnée de fonctionnement primaire. Dans l'exemple représenté sur la figure 1, le capteur 3 mesure une première de donnée de fonctionnement primaire D1, qui est par exemple une intensité circulant dans une phase du moteur électrique, et une deuxième donnée de fonctionnement primaire D2, qui est par exemple une tension entre deux phases du moteur électrique.

En variante, la deuxième donnée de fonctionnement primaire D2 est une tension entre une phase du moteur et un point neutre créé par un circuit électronique ou créé numériquement par logiciel.

Le module de traitement du signal 13 est configuré pour échantillonner et traiter les données de fonctionnement primaires D1-2 afin de les rendre plus facilement exploitables. Pour ce faire, le module de traitement du signal 13 met en œuvre des méthodes connues de traitement du signal numérique, par exemple l'application d'un filtre anti-repliement, la multiplication de la donnée de fonctionnement primaire D1-2 par un gain, une remise à l'échelle de la donnée de fonctionnement primaire D1-2 ou encore une intégration de la donnée de fonctionnement primaire D1-2. Le module de traitement du signal 13 fournit en sortie des données de fonctionnement primaires traitées D3 et D4.

Dans la suite de la description, les données de fonctionnement primaires traitées D3-4 peuvent être remplacées par les données de fonctionnement primaires D1-2.

Les modules de transformation 15A-D prennent en entrée les données de fonctionnement primaires traitées D3-4 et réalisent une transformation de ces données afin d'en extraire d'autres données pertinentes, dites données de fonctionnement secondaires. Dit autrement, les modules de transformation 15A-D sont configurés pour déterminer au moins une donnée de fonctionnement secondaire à partir des données de fonctionnement primaires, éventuellement traitées.

A titre d'exemple, le capteur 3 illustré sur la figure 1 comprend quatre modules de transformation 15A-D, parmi lesquels un module d'estimation de vitesse 15A, un module de diagnostic 15B, un module d'estimation de couple 15C et un module d'estimation de données d'énergie 15D.

Le module d'estimation de vitesse 15A est configuré pour réaliser une estimation d'une vitesse de rotation du moteur électrique à partir de la donnée de fonctionnement primaire traitée D3 représentant le courant dans au moins une phase du moteur. Cette estimation est réalisée par exemple au moyen d'une transformée de Fourier rapide (FFT), d'une détection de glissement ou d'un estimateur d'état à base de filtre de Kalman. La donnée de fonctionnement secondaire fournie par le module d'estimation de vitesse 15A est alors la vitesse de rotation du moteur.

Le module de diagnostic 15B réalise un diagnostic du capteur 3 à partir des données de fonctionnement primaire traitées D3-4. Par exemple, le module de diagnostic 15B détecte si le capteur 3 fonctionne normalement, ou bien si une anomalie empêche le bon fonctionnement du capteur 3. L'anomalie est par exemple une tension d'alimentation du capteur 3 insuffisante ou une défaillance technique de l'un des éléments capteurs, caractérisée par une mauvaise réception de la donnée de fonctionnement primaire correspondante. Les données de fonctionnement secondaires fournies par le module de diagnostic 15B comprennent ainsi, par exemple, un statut interne du capteur 3 et un statut de l'élément capteur pour chaque donnée de fonctionnement primaire. Le statut indique si le capteur 3 ou l'élément capteur considéré fonctionne correctement ou non.

Le module d'estimation de couple 15C est configuré pour réaliser une estimation d'un couple du moteur électrique à partir des données de fonctionnement primaires traitées D3-4. Cette estimation est réalisée, par exemple, au moyen d'une transformation de Clarke, d'un calcul de flux ou d'un filtre Kalman. La donnée de fonctionnement secondaire fournie par le module d'estimation de couple 15C est alors le couple du moteur.

Le module d'estimation de données d'énergie 15D est configuré pour réaliser une estimation de données d'énergie du moteur électrique à partir des données de fonctionnement primaires traitées D3-4. Les données de fonctionnement secondaires fournies par le module d'estimation de données d'énergie 15D comprennent alors par exemple au moins une donnée parmi le groupe composé de :
- une moyenne quadratique de l'une des données de fonctionnement primaire ;
- un facteur de puissance pour chaque phase du moteur électrique ;
- une puissance active pour chaque phase du moteur électrique ;
- une énergie active pour chaque phase du moteur électrique ;
- une puissance réactive pour chaque phase du moteur électrique ;
- une énergie réactive pour chaque phase du moteur électrique ;
- une puissance apparente pour chaque phase du moteur électrique ; et
- une fréquence pour chaque phase du moteur électrique.

Le module d'acquisition de données de fonctionnement primaires 9 reçoit les données de fonctionnement primaires traitées D3-4 à une fréquence d'acquisition de données primaires donnée, par exemple de l'ordre de 5kHz, avantageusement paramétrable. L'intérêt de ce module est de permettre au serveur 7 de disposer des données de fonctionnement primaire traitées D3-4 non transformées, et de les transmettre à la demande du client. En effet, ces données non transformées sont utiles à des fins de maintenance prédictive ou de diagnostic avancé du dispositif, mais ne sont généralement pas transmises dans les capteurs existants, du fait de la très grande quantité de données générées.

Chaque module appartenant au serveur 7 est apte à recevoir et émettre des requêtes en provenance ou à destination du client 5 ou des autres modules du capteur 3, comme détaillé dans la suite de la présente description.

Le module de transmission des données de fonctionnement primaires 11 est configuré pour mettre en forme un fichier de données primaires à partir des données de fonctionnement primaires traitées D3-4 et transmettre le fichier de données primaires au client 5, et ce uniquement après réception d'une requête d'obtention 27A (dite requête GET) de données primaires de la part du client 5. Plus spécifiquement, le module de transmission des données de fonctionnement primaires 11 est configuré pour, suite à la réception d'une requête d'obtention 27A de données primaires de la part du client 5, enregistrer les données de fonctionnement primaires traitées D3-4 pendant une durée d'enregistrement prédéterminée. La durée d'enregistrement prédéterminée est avantageusement de l'ordre de 10 secondes et paramétrable par un utilisateur. Les données de fonctionnement primaires ainsi enregistrées sont ensuite mises en forme par le module de transmission des données de fonctionnement primaires 11 dans un fichier de données primaires, respectant un standard, de sorte à être exploitable par le client 5. Le fichier de données primaires comprend ainsi une évolution des données de fonctionnement primaires au cours du temps sur la durée d'enregistrement prédéterminée. Le fichier de données primaires est avantageusement stocké dans une mémoire tampon F12 (ou *buffer* en anglais) du module de transmission des données de fonctionnement primaire 11. En pratique, dans l'exemple représenté sur la figure 1, le module de transmission des données de fonctionnement primaires 11 obtient l'enregistrement des données de fonctionnement primaires traitées D3-4 au moyen d'une requête d'obtention 27B envoyée au module d'acquisition 9. Cette requête d'obtention 27B déclenche l'enregistrement des données de fonctionnement primaires traitées D3-4 reçues par le module d'acquisition 9 à la fréquence d'acquisition de données primaires donnée. Le module de transmission des données de fonctionnement primaires 11 est ensuite apte à transmettre le fichier de données primaires au client 5, via un bus de données Ethernet.

Les modules de transmission de données de fonctionnement secondaires 17A-B sont configurés pour générer un mot, représentant la dernière valeur déterminée de l'au moins une donnée de fonctionnement secondaire, et transmettre le mot au client 5. Le mot est avantageusement enregistré dans une mémoire tampon F18 du module de transmission des données de fonctionnement secondaires 17A-B considéré. A chaque module de transmission des données de fonctionnement secondaires 17A-B correspond une ou plusieurs donnée(s) de fonctionnement secondaire(s) respective(s), et donc un mot respectif représentant ces données de fonctionnement secondaires.

Avantageusement, le mot est une suite binaire, par exemple stockée sur 8 bits. En variante, le mot est un fichier de données secondaires similaire au fichier de données primaires.

Les modules de transmission de données de fonctionnement secondaires 17A-B transmettent leur mot respectif soit par une requête de publication (dite requête PUBLISH) 29A du mot à destination du client 5, émise à une fréquence de transmission de données secondaires prédéterminée, soit seulement après réception d'une requête d'obtention 27C de données secondaires de la part du client 5. Ces deux alternatives peuvent coexister dans un même capteur 3, comme dans l'exemple de la figure 1.

Afin de mettre en forme le mot, qui représente les dernières valeurs calculées des données secondaires, les modules de transmission de données de fonctionnement secondaires 17A-B doivent avoir accès aux données de fonctionnement secondaires. Pour ce faire, les modules de transmission de données de fonctionnement secondaires 17A-B reçoivent avantageusement des requêtes de publication 29B-C de données secondaires en provenance d'un ou plusieurs des modules de transformation 15A-D. Ces requêtes de publication 29B-C de données secondaires sont émises à une fréquence d'acquisition de données secondaires prédéterminée, avantageusement paramétrable.

En variante non représentée, les modules de transmission de données de fonctionnement secondaires 17A-B émettent une requête d'obtention de données secondaires à destination des modules de transformation 15A-D.

Dans l'exemple de la figure 1, le capteur 3 comprend deux modules de transmission de données de fonctionnement secondaires 17A-B, parmi lesquels un module de transmission de diagnostic 17A et un module de transmission de données agrégées 17B.

Le module de transmission de diagnostic 17A reçoit les données de fonctionnement secondaires fournies par le module de diagnostic 15B, comprenant les statuts du capteur 3 et des éléments capteurs. Dès réception de ces statuts, le module de transmission de diagnostic 17A génère le mot représentant les statuts du capteur 3 et des éléments capteurs. Le module de transmission de diagnostic 17A est ensuite apte à émettre la requête de publication 29A du mot, à destination du client 5.

Le module de transmission de données agrégées 17B reçoit les données de fonctionnement secondaires fournies par le module d'estimation de vitesse 15A, le module d'estimation de couple 15C et le module d'estimation de données d'énergie 15D. Le module de transmission de données agrégées 17B stocke dans la mémoire tampon F18 du module de transmission de données agrégées 17B la dernière valeur de l'estimation de vitesse du moteur, de l'estimation de couple du moteur et des données d'énergie du moteur. Le mot, représentant des données de fonctionnement secondaires demandées par le client 5 parmi l'estimation de vitesse du moteur, l'estimation de couple du moteur et les données d'énergie du moteur, est généré et transmis au client 5, via un bus de données Ethernet, uniquement après réception de la requête d'obtention 27C de données secondaires envoyée par le client 5.

Le module réseau client 19 permet au serveur 7 du capteur 3 de communiquer avec le client 5 selon un protocole Internet nécessitant une adresse IP (de l'anglais *Internet Protocol*), en particulier une adresse IPv4 ou IPv6. Par exemple, le module réseau client 19 permet au serveur 7 du capteur 3 de communiquer avec le client 5 selon le protocole OPC-UA (Open Platform Communication Unified Architecture). En particulier, le module réseau client 19 est configuré pour recevoir une adresse IP affectée par le client 5, préalablement à toute requête d'obtention 27 ou de publication 29 entre le serveur 7 et le client 5.

Le module de gestion de paramètres 21 permet de gérer des paramètres déterminant des modalités d'acquisition et/ou de transmission des données de fonctionnement au client 5, selon les besoins du client 5. Plus précisément, le module de gestion de paramètres 21 est configuré pour recevoir les paramètres via une requête de changement 29D de paramètres en provenance du client 5 et pour stocker ces paramètres dans une mémoire non volatile F22 du module de gestion de paramètres 21. A titre d'exemple, ces paramètres comprennent la fréquence d'acquisition de données primaires, la fréquence d'acquisition de données secondaires, la fréquence de transmission de données secondaires, la durée d'enregistrement, des paramètres constitutifs du dispositif et/ou une licence d'activation du capteur 3. Grâce à la requête de changement de paramètres 29D, ces paramètres sont adaptés au besoin du client 5. Lorsqu'il reçoit une requête de changement de paramètres 29D, le module de gestion de paramètres 21 émet une requête de publication 29E interne de paramètres à destination de tous les modules concernés par les paramètres. Le module de gestion de paramètre 21 permet aussi de conserver les paramètres en interne dans le capteur 3, en particulier au sein du serveur 7, afin de ne pas perdre les paramètres en cas de perte de connexion avec le client 5 ou de redémarrage du capteur 3.

Le client 5 est un système électronique apte à communiquer avec le capteur 3, notamment pour recevoir les données de fonctionnement primaires et secondaires, et permettre, par exemple, un traitement de ces données à des fins de supervision, d'optimisation ou de diagnostic du dispositif.

Comme représenté sur la figure 1, le client 5 comprend un module orchestrateur 31. En complément facultatif, il comprend en outre un module réseau serveur 33, au moins un module de supervision 35A, 35B et/ou 35C et un module d'analyse 36. Le module d'analyse 36 comprend avantageusement une base de données 41 et un sous-module d'analyse 43.

Le client 5 comprend par exemple une unité de traitement d'informations, non représentée, formée par exemple d'une mémoire et d'un processeur associé à la mémoire.

Selon cet exemple, le module orchestrateur 31, ainsi qu'en complément facultatif le module réseau serveur 33, les modules de supervision 35A-C et le sous-module d'analyse 43 sont réalisés chacun sous forme d'un logiciel, ou d'une brique logicielle, exécutable par le processeur. La mémoire du client 5 est alors apte à stocker un logiciel orchestrateur, ainsi qu'en complément facultatif un logiciel de réseau serveur, et un logiciel de supervision et un logiciel d'analyse. Le processeur est alors apte à exécuter chacun de ces logiciels.

En variante non représentée, le module orchestrateur 31, ainsi qu'en complément facultatif le module réseau serveur 33, les modules de supervision 35A-C et le sous-module d'analyse 43 sont réalisés chacun sous forme d'un composant logique programmable, tel qu'un FPGA (de l'anglais *Field Programmable Gate Array*).

Lorsque le client 5 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, tout type de mémoire non-volatile (par exemple FLASH ou NVRAM) ou une carte magnétique. Sur le support lisible est alors mémorisé un programme d'ordinateur comprenant des instructions logicielles.

Avantageusement, le client 5 comprend une interface utilisateur 39, permettant à un utilisateur d'interagir avec le client 5. L'interface utilisateur 39 affiche les données exposées par les modules de supervision 35A-C, par exemple sous la forme d'un affichage sur un écran, permettant notamment à l'utilisateur de consulter les données de fonctionnement et de réaliser des actions de paramétrage.

On appelle module utilisateur 37 l'ensemble formé des modules de supervision 35A-C et de l'interface utilisateur 39.

Le module réseau serveur 33 permet au client 5 de communiquer avec le serveur 7 selon le protocole OPC-UA. En particulier, le module réseau serveur 33 est configuré pour affecter une adresse IP au capteur 3, préalablement à toute requête d'obtention 27 ou de publication 29 entre le serveur 7 et le client 5. Pour ce faire, le module réseau serveur 33 échange avec le module réseau client 19 des requêtes bidirectionnelles 23. L'affectation de l'adresse IP se fait par exemple selon le protocole DHCP (de l'Anglais *Dynamic Host Configuration Protocol*)*.* Dans le cas où l'ensemble 1 comprend plusieurs capteurs 3, le module réseau serveur 33 permet d'attribuer une adresse IP distincte à chaque capteur 3, afin que le client 5 puisse recevoir et distinguer des données de chacun de ces capteurs 3.

Le module orchestrateur 31 est configuré pour envoyer la requête d'obtention 27A de données primaires au serveur 7 et pour recevoir le fichier de données primaires en provenance du serveur 7 en réponse à cette requête 27A. Selon le besoin, dans d'autres exemples de l'invention non représentés, le module orchestrateur 31 est configuré pour échanger différentes requêtes d'obtention 27 et de publication 29 avec le serveur 7.

Dans l'exemple illustré, la requête d'obtention 27A de données primaires émise par le module orchestrateur 31 est reçue par le module de transmission de données primaires 11. Comme expliqué précédemment, le module de transmission de données primaires 11 transmet, en réponse à cette requête 27A, le fichier de données primaires au module orchestrateur 31.

Le module orchestrateur 31 est avantageusement configuré pour, après réception du fichier de données primaires, rééchantillonner les données de fonctionnement primaires contenues dans le fichier de données primaires selon des besoins du module d'analyse 36, créant un fichier de données primaires rééchantillonné. Le module orchestrateur 31 est en outre configuré pour envoyer une requête de publication 29F du fichier de données primaires ou du fichier de données primaires rééchantillonné à destination du module d'analyse 36.

La base de données primaires 41 du module d'analyse 36 est, par exemple, une base de données SQL (de l'Anglais *Structured Query Language*)*.* La base de données 41 est configurée pour stocker les fichiers de données primaires ou les fichiers de données primaires rééchantillonnés reçus du module orchestrateur 31 via la requête de publication 29F. La base de données 41 stocke, en outre, des résultats d'analyse issues du sous-module d'analyse 43.

Avantageusement, la base de données primaires 41 comprend, en outre, une interface de communication avec le module utilisateur 37, permettant notamment à l'interface utilisateur 39 de lire et restituer les résultats d'analyse stockés dans la base de données primaires 41.

Le sous-module d'analyse 43 est configuré pour communiquer avec la base de données primaires 41, de sorte à lire et écrire des données dans la base de données 41. En particulier, selon l'exemple illustré, le sous-module d'analyse 43 lit les fichiers de données primaires dans la base de données 41, les analyse et écrit dans la base de données primaires 41 les résultats d'analyse issus de cette analyse.

Pour ce faire, le sous-module d'analyse 43 est apte à exécuter un algorithme d'analyse, visant par exemple à diagnostiquer un état du dispositif à partir des données de fonctionnement primaires, à des fins de maintenance prédictive ou de diagnostic avancé du dispositif. Par exemple, l'algorithme d'analyse détecte des variations inhabituelles dans les données de fonctionnement primaires, révélant un dysfonctionnement du dispositif. Selon cet exemple, les résultats d'analyse indiquent l'état du dispositif. Selon un autre exemple, les données de fonctionnement primaires sont utilisées par le sous-module d'analyse 43 pour élaborer un jumeau numérique du dispositif, qui est un exemple de diagnostic avancé du dispositif. Toute méthode d'analyse connue de l'Homme du métier compatible avec la structure du sous-module 43 peut être mise en œuvre par le sous-module d'analyse 43.

Chaque module de supervision 35A-C est configuré pour échanger des requêtes d'obtention 27C, de publication 29A ou de changement 29D avec le serveur 7. Ces requêtes permettent au module utilisateur 37 d'accéder aux données de fonctionnement primaires et secondaires du dispositif, afin de les restituer à l'utilisateur via l'interface utilisateur 39. Elles permettent également d'agir sur le serveur 7, notamment en tenant compte de paramètres saisis par l'utilisateur via l'interface utilisateur 39.

Dans l'exemple représenté sur la figure 1, le client 5 comprend trois modules de supervision des données secondaires 35A-C, parmi lesquels un module de supervision de statut 35A, un module de supervision de données agrégées 35B et un module de supervision de paramètres 35C.

Le module de supervision de statut 35A reçoit avantageusement la requête de publication 29A du mot provenant du module de diagnostic 17A. En outre, le module de supervision de statut 35A permet de vérifier un état du réseau, puisque que le module de supervision de statut 35A ne reçoit plus les requêtes de publication 29A du mot provenant du module de diagnostic 17A à la fréquence de transmission de données de transmission prédéterminée en cas de déconnexion du capteur 3 du réseau. Ainsi, le module de supervision de statut 35A permet à l'interface utilisateur 39 de restituer l'état du capteur 3, des éléments capteurs et du réseau. Ainsi, l'utilisateur est informé en cas de défaillance du capteur 3 et peut mettre en œuvre des actions de mitigation adaptées.

Le module de supervision de données agrégées 35B émet avantageusement la requête d'obtention 27C de données secondaires à destination du module de transmission de données agrégées 17B. La requête d'obtention 27C est émise ou bien périodiquement, ou bien à la demande de l'utilisateur via l'interface utilisateur 39. Ainsi, le module de supervision de données agrégées 35A permet au module utilisateur 37 de restituer les données de fonctionnement secondaires contenues dans le mot généré par le module de transmission de données agrégées 17B, en l'occurrence l'estimation de vitesse, l'estimation de couple et les données d'énergie du moteur, via l'interface utilisateur 39.

Le module de supervision de paramètres 35C émet avantageusement la requête de changement de paramètre 29D à destination du module de gestion de paramètres 21. Cette requête de changement de paramètre 29D est avantageusement émise à chaque modification d'un paramètre par l'utilisateur via l'interface utilisateur 39. Ainsi, les paramètres déterminant les modalités d'acquisition et/ou de transmission des données de fonctionnement au client 5 sont adaptées au besoin de l'utilisateur.

Un procédé de mesure de données de fonctionnement pour le dispositif au moyen de l'ensemble 1 est détaillé dans la suite de la présente description.

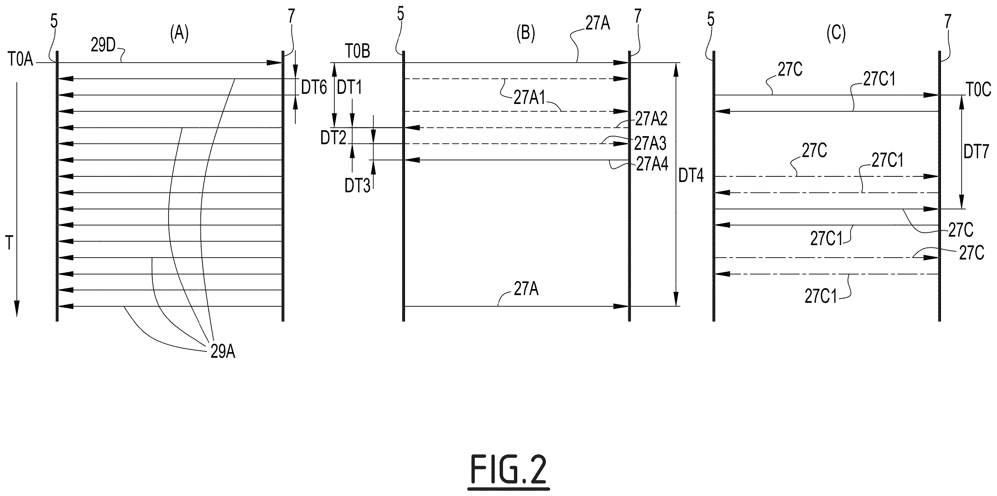

Pour la chronologie des différentes requêtes échangées entre le serveur 7 et le client 5, il est fait référence à la figure 2. Chacun des inserts (A) à (C) illustre un exemple non limitatif d'échanges de requêtes entre le client 5, à gauche de chaque insert, et le serveur 7 du capteur 3, à droite de chaque insert, au cours du temps s'écoulant dans la direction de la flèche T.

Le procédé de mesure de données de fonctionnement comprend *a minima* une acquisition des données de fonctionnement primaires par le capteur 3, une réception par le serveur 7 de la requête d'obtention 27A de données primaires émise par le client 5, et une mise en forme du fichier de données primaires et une transmission du fichier de données primaires au client 5 par le module de transmission de données de fonctionnement primaire 11.

Comme expliqué ci-dessus, les éléments capteurs du capteur 3 acquièrent les données de fonctionnement primaires D1-2. Les données de fonctionnement primaires D1-2 sont des signaux analogiques ou des signaux numériques. Dans l'exemple illustré, les données de fonctionnement primaires sont ensuite traitées et échantillonnées à la fréquence d'acquisition des données primaires par le module de traitement du signal 13 puis reçues par le module d'acquisition de données de fonctionnement primaires 9. Dans le cas où les données de fonctionnement primaires D1 sont des signaux numériques, leur fréquence d'échantillonnage est avantageusement supérieure à dix fois la fréquence d'acquisition des données primaires.

A un instant T0B, représenté sur l'insert (B) de la figure 2, le module orchestrateur 31 du client 5 envoie la requête d'obtention 27A de données primaires au module de transmission de données primaires 11 du serveur 7. Comme expliqué précédemment, cette requête déclenche l'envoi de la requête d'obtention 27B au module d'acquisition des données de fonctionnement primaire 9, qui elle-même déclenche l'enregistrement des données de fonctionnement primaires pendant la durée d'enregistrement prédéterminée DT1. Dans l'exemple représenté, pendant cet intervalle de temps DT1, le client 5 envoie périodiquement des requêtes secondaires de contrôle 27A1 au serveur 7 pour savoir si l'enregistrement des données de fonctionnement primaires est terminé. Les requêtes secondaires de contrôle 27A1 sont optionnelles. Une fois l'enregistrement terminé au terme de la durée d'enregistrement DT1, le module de transmission de données de fonctionnement primaire 9 met en forme le fichier de données primaires, puis envoie au client 5 une requête secondaire d'information 27A2 indiquant que le fichier de données primaires est prêt. Ensuite, le client 5 envoie au serveur 7 une requête secondaire de demande de transfert 27A3. Puis, après un intervalle de temps DT3 à partir de la requête secondaire de demande de transfert 27A3, de préférence inférieur à une seconde, le serveur 7 envoie une réponse 27A4 au client 5, comprenant le fichier de données primaires. Dit autrement, c'est lors de la réponse 27A4 que le serveur 7 transmet au client 5 le fichier de données primaires.

Au terme de cet échange de requêtes, le module orchestrateur 31 du client 5 dispose donc du fichier de données primaires. Il peut alors, comme expliqué précédemment, transmettre ce fichier de données primaires au module d'analyse 36, dont les résultats d'analyse sont ensuite restitués à l'utilisateur via l'interface utilisateur 39.

Ainsi, le procédé de mesure de données de fonctionnement permet à l'utilisateur d'accéder à des résultats d'analyse permettant de faire de la maintenance prédictive ou un diagnostic avancé du dispositif, et ce sans encombrer les canaux de transmission, puisque les données de fonctionnement primaires sont envoyées à la demande du client 5, lorsque cela est nécessaire.

Après une durée DT4 à partir de l'instant T0B, le client 5 envoie de nouveau une requête d'obtention 27A de données primaires au serveur 7. Les résultats d'analyse dispensés par l'interface utilisateur 39 sont ainsi mis à jour en fonction de l'évolution des données de fonctionnement du dispositif. Selon un premier exemple de réalisation, les requêtes d'obtention 27A de données primaires sont envoyées périodiquement par le client 5, par exemple à une période DT4 égale à 1h, ce qui permet de faire de la maintenance prédictive en limitant la quantité de données transmises. Selon un autre exemple de l'invention, les requêtes d'obtention 27A de données primaires sont envoyées sur commande de l'utilisateur à partir de l'interface utilisateur 39.

En complément facultatif, le procédé de mesure de données de fonctionnement comprend d'autres échanges de requêtes tels que les échanges illustrés sur les inserts (A) et (C) de la figure 2.

Dans l'exemple illustré sur l'insert (A) de la figure 2, le module de supervision de paramètres 35C du client 5 envoie, à un instant T0A, la requête de changement de paramètres 29D au module de gestion de paramètres 21 du serveur 7. L'instant T0A correspond par exemple à une première connexion entre le client 5 et le serveur 7, après affectation d'une adresse IP au capteur 3 par le canal de communication des requêtes bidirectionnelles 23 entre le module réseau client 19 et le module réseau serveur 33.

A partir de l'instant T0A, le module de transmission de diagnostic 17A du serveur 7 envoie périodiquement une requête de publication 29A du mot représentant le statut du capteur 3 au module de supervision de statut 35C, à la fréquence de transmission de données secondaires prédéterminée. La fréquence de transmission de données secondaires prédéterminée est l'inverse d'une période DT6, par exemple de l'ordre d'une seconde, illustrée sur l'insert (A) de la figure 2.

La réception de la requête de publication 29A à la fréquence de transmission de données secondaires prédéterminée permet au client 5 de vérifier périodiquement le statut du capteur 3 et de le restituer à l'utilisateur via l'interface utilisateur 39.

Dans l'exemple illustré sur l'insert (C) de la figure 2, le module de supervision de données agrégées 35B du client 5 envoie à un instant T0C une requête d'obtention 27C de données secondaires au module de transmission de données agrégées 17B du serveur 7. En réponse à la requête d'obtention 27C de données secondaires, le serveur 7 envoie au client 5 une réponse 27C1 comprenant le mot correspondant. En l'occurrence, dans l'exemple, le mot correspondant comprend une agrégation de l'estimation de vitesse, de l'estimation de couple et des données d'énergie du moteur. Comme décrit précédemment, cette requête d'obtention 27C permet ainsi au client 5 de disposer des données de fonctionnement secondaires du dispositif et de les restituer à l'utilisateur via l'interface utilisateur 39. Du fait que ces données sont envoyées à la demande du client 5, la quantité de données transmise et stockée dans l'ensemble 1 est optimisée par rapport au besoin de l'utilisateur.

La requête d'obtention 27C de données secondaires peut être automatiquement émise, périodiquement à une deuxième fréquence d'émission de données secondaires prédéterminée, ou bien à la demande de l'utilisateur via l'interface utilisateur 39. Dans l'exemple représenté sur l'insert (C) de la figure 2, ces deux variantes coexistent dans le procédé. Ainsi, les requêtes d'obtention 27C de données secondaires représentées sous forme de flèches continues sont envoyées périodiquement, à la deuxième fréquence d'émission de données secondaires prédéterminée qui est l'inverse d'une période DT7 représentée sur la figure 2, tandis ce que les requêtes d'obtention 27C de données secondaires représentées sous forme de flèches discontinues sont envoyées uniquement à la demande de l'utilisateur via l'interface utilisateur 39. Ainsi, puisque la deuxième fréquence d'émission de données secondaires est paramétrée par le client 5 et que les requêtes périodiques peuvent être complétées de requêtes à la demande selon le besoin, la quantité de données transmise et stockée dans l'ensemble 1 est optimisée par rapport au besoin de l'utilisateur.

En variante non représentée, l'échange de requêtes représenté sur l'insert (C) de la figure 2 comprend des requêtes secondaires analogues au requêtes secondaires 27A1, 27A2 et 27A3 de l'exemple de l'insert (B) de la figure 2.

Puisque les requêtes sont envoyées à la demande du client 5, une plus grande diversité de données peut être mise à disposition par le capteur 3 que par les capteurs usuels, sans risque de saturer les canaux de transmission par rapport aux capteurs existants. En particulier, l'invention rend possible à la fois la transmission des données de fonctionnement primaires, utiles à des fins de maintenance prédictive et de diagnostic avancé du dispositif, ainsi que des données de fonctionnement secondaires, utiles à des fins de supervision, d'optimisation ou de diagnostic du dispositif.

Toute caractéristique décrite ci-dessus pour un exemple de réalisation ou une variante, peut être mise en œuvre également dans les autres exemples de réalisation ou variantes décrit ci-dessus, pour autant que techniquement possible.

## Revendications

1. Capteur (3) de données de surveillance pour un dispositif, configuré pour acquérir des données de fonctionnement primaires (D1, D2) sur le dispositif, le capteur (3) comprenant un module de transmission des données de fonctionnement primaires (11), configuré pour mettre en forme un fichier de données primaires à partir des données de fonctionnement primaires (D1, D2) et transmettre le fichier de données primaires à un client (5), **caractérisé en ce que** :
- le capteur (3) comprend un serveur (7) configuré pour recevoir des requêtes (27A, 27C) de la part du client (5) ;
- le module de transmission des données de fonctionnement primaires (11) appartient au serveur (7) ; et
- le module de transmission des données de fonctionnement primaires (11) est configuré pour mettre en forme et transmettre le fichier de données primaires uniquement après réception d'une requête d'obtention de données primaires (27A) de la part du client (5).

2. Capteur (3) selon la revendication 1, comprenant :
- au moins un module de transformation (15A, 15B, 15C, 15D), configuré pour déterminer au moins une donnée de fonctionnement secondaire à partir des données de fonctionnement primaires (D1, D2) ; et
- au moins un module de transmission de données de fonctionnement secondaires (17A, 17B), appartenant au serveur (7), configuré pour enregistrer un mot représentant la dernière valeur déterminée de l'au moins une donnée de fonctionnement secondaire et transmettre le mot au client (5).

3. Capteur (3) selon la revendication 2, dans lequel le ou au moins l'un des module(s) de transmission de données de fonctionnement secondaires (17B) est configuré pour transmettent le mot seulement après réception d'une requête d'obtention de données secondaires (27C) de la part du client (5).

4. Capteur (3) selon l'une quelconque des revendications précédentes, dans lequel le dispositif est un moteur comprenant au moins deux phases et dans lequel les données de fonctionnement primaires (D1, D2) comprennent une valeur d'intensité pour chaque phase et une valeur de tension entre les phases.

5. Capteur (3) selon la revendication 4 prise avec la revendication 2, dans lequel les données de fonctionnement secondaires comprennent au moins une donnée parmi le groupe composé de :
- une moyenne quadratique d'une donnée de fonctionnement primaire (D1, D2) ;
- un facteur de puissance pour chaque phase ;
- une puissance active pour chaque phase ;
- une énergie active pour chaque phase ;
- une puissance réactive pour chaque phase ;
- une énergie réactive pour chaque phase ;
- une puissance apparente pour chaque phase ;
- une fréquence pour chaque phase ;
- une estimation d'une vitesse de rotation du moteur ;
- une estimation d'un couple du moteur ; et
- un statut interne du capteur (3).

6. Capteur (3) selon l'une quelconque des revendications précédentes, dans lequel le serveur (7) comprend un module de gestion de paramètres (21), configuré pour recevoir des paramètres via une requête de changement de paramètres (29D) en provenance du client (5) et pour stocker les paramètres, les paramètres déterminant des modalités d'acquisition et/ou de transmission des données de fonctionnement au client (5).

7. Ensemble (1) composé de :
- au moins un capteur (3) selon l'une quelconque des revendications précédentes ; et
- un client (5), comprenant un module orchestrateur (31) configuré pour envoyer la requête d'obtention de données primaires (27A) au serveur (7) et pour recevoir le fichier de données primaires en provenance du serveur (7).

8. Ensemble (1) selon la revendication 7, dans lequel :
- le serveur (7) de l'au moins un capteur (3) et le client (5) sont respectivement un serveur et un client selon le protocole OPC-UA ;
- la transmission des fichiers de données et des requêtes entre le serveur (7) et le client (5) se fait via un protocole Ethernet ;
- le client (5) comprend un module réseau serveur (33), configuré pour affecter une adresse IP à l'au moins un capteur (3) ; et
- le serveur (7) comprend un module réseau client (19), configuré pour recevoir l'adresse IP affectée par le client (5).

9. Ensemble (1) selon la revendication 7 ou 8, dans lequel le client (5) comprend un module d'analyse (36), configuré pour recevoir et analyser le fichier de données primaires reçu par le module orchestrateur (31) à des fins de maintenance prédictive du dispositif ou de diagnostic avancé du dispositif.

10. Procédé de mesure de données de fonctionnement pour un dispositif au moyen d'un capteur (3) selon l'une quelconque des revendications 1 à 6, le procédé comprenant :
- une acquisition des données de fonctionnement primaires (D1, D2) par le capteur (3) ;
- une réception par le serveur (7) de la requête d'obtention de données primaires (27A) ; puis
- une mise en forme du fichier de données primaires et une transmission du fichier de données primaires au client (5) par le module de transmission de données de fonctionnement primaire (11).
